# EUROPEAN PATENT APPLICATION

(11) **EP 2 889 581 A1**
(43) Date of publication of application: **01.07.2015**
(21) Application number: 13839553.8
(22) Date of filing: 17.09.2013
(51) Int. Cl.: G01C 21/26

(54) **NAVIGATION TERMINAL, NAVIGATION METHOD AND REMOTE NAVIGATION SERVICE SYSTEM**

(30) Priority: 20.09.2012 CN 201210351868
(71) Applicant: Huawei Device Co., Ltd., Longgang District Shenzhen Guangdong 518129 (CN)
(72) Inventor: LIU, Zhu, Shenzhen Guangdong 518129 (CN); ZHANG, Zhiyong, Shenzhen Guangdong 518129 (CN); TU, Yongfeng, Shenzhen Guangdong 518129 (CN)
(74) Representative: Pfenning, Meinig & Partner GbR
(86) International application number: PCT/CN2013/083673
(87) International publication number: WO 2014/044173

(57) **Abstract**

The present invention provides a navigation terminal, a navigation method, and a remote navigation service system, where the navigation method includes: receiving a navigation command input by a user; starting a satellite positioning unit to determine current position information of a vehicle; sending the navigation command and the current position information of the vehicle to a remote navigation service system through a communications interface; receiving a navigation indication sent back by the remote navigation service system through the communications interface; and presenting the navigation indication to the user for navigation. The navigation method further includes: photographing a road scene in front of the vehicle, where the road scene is displayed on a display screen of a man-machine interface, and the navigation indication includes a driving direction indication, and the driving direction indication is superimposed on the road scene for navigation. The method provides the user with a more real-time and quicker navigation service, thereby improving user experience.

## Description

This application claims priority to Chinese Patent Application No. 201210351868.7, filed with the Chinese Patent Office on September 20, 2012, which is incorporated herein by reference in its entirety.

### TECHNICAL FIELD

The present invention relates to a navigation technology, and in particular, to a terminal, a system, and a method that can implement real-time navigation according to a road condition.

### BACKGROUND

Continuous expansion of modern cities leads to continuous extension of roads. Accompanied by rapid development of the automobile industry, automobiles are increasingly popularized, a travelling radius of people is getting larger. Due to an increase of a travelling radius and an increase of road complexity, people have to use a navigation apparatus during travelling, so as to quickly reach a destination. Currently, most road navigation apparatuses used for a vehicle have a road positioning function and a road navigation function. When a global satellite positioning system is used with an azimuth detector, and a vehicle speed detector, the road positioning function is used to calculate a position coordinate of the vehicle in real time, and compare the position coordinate with stored road data in a road database to work out a road on which the vehicle is currently travelling as well as a specific position of the vehicle on the road. A map of which data becomes larger requires to be updated continually by a user, which also imposes a higher requirement on software and hardware capabilities of a navigation terminal. Implementation of a required navigation service for a user of the terminal requires higher configuration costs.

In addition, an increasing number of vehicles on the road also leads to a worse traffic condition. A conventional navigation manner of simply planning a route cannot meet a practical requirement of the user of the terminal. A better solution is required to improve user experience.

### SUMMARY

In view of this, an objective of the present invention is to provide a real-time navigation service system and a navigation terminal, so as to provide a quick and real-time navigation service.

In an implementation manner of the present invention, a navigation terminal is connected to and communicates with a remote navigation service system, where the navigation terminal includes: a man-machine interface, configured to receive a navigation command input by a user; a communications interface, configured to implement remote communication; a satellite positioning unit, configured to determine current position information of a vehicle; and a navigation unit. The satellite positioning unit may be a GPS (Global Position System, Global Positioning System) unit or another unit that has a satellite positioning function. The navigation unit is configured to send the navigation command and the current position information of the vehicle to the remote navigation service system through the communications interface, and receive a navigation indication sent back by the remote navigation service system through the communications interface. The man-machine interface includes a touch display screen, which is configured to input the navigation command for the user, and the man-machine interface is further configured to present the navigation indication.

As a further improvement of the present invention, the navigation terminal further includes a camera apparatus, which is configured to photograph a road scene in front of the vehicle, where the road scene is displayed on the display screen of the man-machine interface.

As a further improvement of the present invention, the navigation indication includes a driving direction indication, where the driving direction indication is superimposed on the road scene to present a travelling direction of the vehicle.

As a further improvement of the present invention, the navigation indication includes a voice prompt, the man-machine interface includes a speaker, and the voice prompt is played by the speaker and presented to the user.

As a further improvement of the present invention, the navigation command includes information about a start point of navigation and information about a destination of navigation.

As a further improvement of the present invention, the camera apparatus is built in a body of the navigation terminal.

As a further improvement of the present invention, the camera apparatus is separated from a body of the navigation terminal and is disposed at a front end of the vehicle, and transfers the photographed road scene to the body of the navigation terminal in a wired or wireless manner, and the photographed road scene is displayed on the display screen of the man-machine interface.

A navigation method of a navigation terminal in an implementation manner of the present invention includes: receiving a navigation command input by a user; starting a satellite positioning unit to determine current position information of a vehicle; sending the navigation command and the current position information of the vehicle to a remote navigation service system through a communications interface; receiving a navigation indication sent back by the remote navigation service system through the communications interface; and presenting the navigation indication to the user for navigation.

As a further improvement of the present invention, the navigation method further includes photographing a road scene in front of the vehicle, where the road scene is displayed on a display screen of a man-machine interface.

As a further improvement of the present invention, the navigation indication includes a driving direction indication, where the driving direction indication is superimposed on the road scene to present a travelling direction of the vehicle.

As a further improvement of the present invention, the navigation indication includes a voice prompt, the man-machine interface includes a speaker, and the voice prompt is played by the speaker and presented to the user.

A remote navigation service system in an implementation manner of the present invention is configured to provide a navigation service for a navigation terminal, where the remote navigation service system includes: a communications interface, configured to receive a navigation command and current position information of a vehicle from the navigation terminal; a real-time road condition acquiring unit, configured to acquire a real-time road traffic condition; and a route planning unit, configured to plan, based on a default navigation principle, a driving route according to the navigation command and the real-time road traffic condition, and form a navigation indication with reference to the current position information of the vehicle. The navigation indication is sent to the navigation terminal through the communications interface.

As a further improvement of the present invention, the navigation indication includes a driving direction indication, which is used to indicate a travelling direction of the vehicle in a current position.

As a further improvement of the present invention, the navigation indication includes a voice prompt, which is used to perform voice broadcasting of a travelling direction of the vehicle in a current position.

As a further improvement of the present invention, the navigation command includes information about a start point of navigation and information about a destination of navigation.

As a further improvement of the present invention, the route planning unit divides a road between the start point and the destination into multiple navigation segments, where each two adjacent navigation segments are connected by a navigation node. As a further improvement of the present invention, the navigation node is a road intersection.

As a further improvement of the present invention, the route planning unit connects, by using the navigation node, clear navigation segments between the start point and the destination of navigation to form a proposed navigation route.

As a further improvement of the present invention, the route planning unit may further select the proposed navigation route according to a second navigation principle.

As a further improvement of the present invention, the route planning unit calculates, based on the second navigation principle and according to a length of each navigation segment and a currently feasible travelling speed under a real-time road condition, time required to pass through a corresponding navigation segment.

As a further improvement of the present invention, the route planning unit selects, according to the time required to pass through each navigation segment, a navigation route with a shortest travelling time from the current position of the vehicle to the destination of navigation.

As a further improvement of the present invention, the route planning unit determines, according to a next navigation segment to which each navigation node is directed in a planned navigation route, a navigation indication that s used when the vehicle travels to the navigation node.

As a further improvement of the present invention, the navigation indication is sent to the navigation terminal through the communications interface before the vehicle reaches each navigation node.

As a further improvement of the present invention, the real-time road condition acquiring unit acquires the real-time road traffic condition from a server of a city monitoring system or a data center of a traffic police department in a wired or wireless manner.

In implementation manners of the present invention, a user is provided with a more real-time and quicker navigation service by configuring services, such as map storage and navigation calculation, in a remote navigation service system, using a powerful storage and computing capability of the remote navigation service system, and acquiring real-time road traffic condition information in an all-around and professional way. As a result, user experience is improved.

### BRIEF DESCRIPTION OF DRAWINGS

FIG. 1 shows a schematic diagram of an architecture of a navigation terminal and a remote navigation service system in a specific implementation manner of the present invention;
FIG 2 shows another schematic diagram of an architecture of a navigation terminal and a remote navigation service system in a specific implementation manner of the present invention;
FIG 3 shows still another schematic diagram of an architecture of a navigation terminal and a remote navigation service system in a specific implementation manner of the present invention;
FIG 4 shows a flowchart of planning a navigation route according to the present invention;
FIG 5 is a detailed flowchart of steps, shown in FIG 4, for re-planning a route according to a real-time dynamic road condition;
FIG. 6 shows a schematic diagram of a navigation route planning principle according to the present invention; and
FIG. 7 is a simplified diagram of a navigation route planning principle according to FIG. 6.

### DESCRIPTION OF EMBODIMENTS

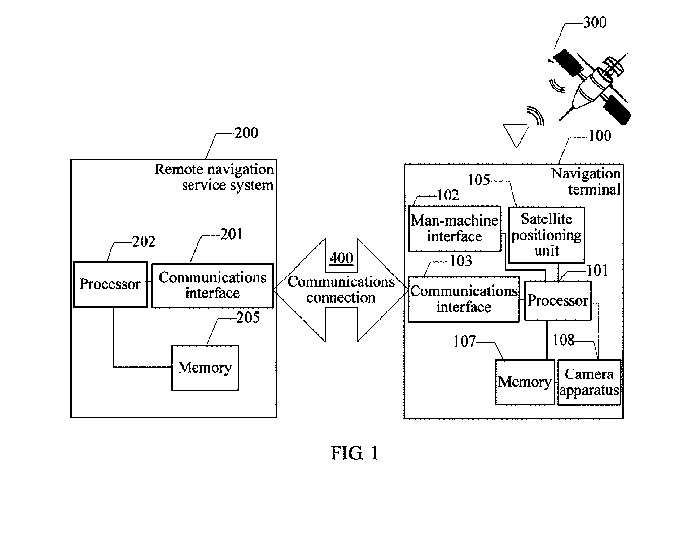

FIG 1 shows a schematic diagram of an architecture of a navigation terminal 100 and a remote navigation service system 200 in a specific implementation manner of the present invention. The navigation terminal 100 is installed or placed on a vehicle (not shown in the figure), and is configured to communicate with the remote navigation service system 200 and obtain a navigation indication from the remote navigation service system 200 to perform vehicle navigation.

In this implementation manner of the present invention, the navigation terminal 100 uses a star structure and includes a processor 101, a man-machine interface 102, a communications interface 103, a satellite positioning unit 105, and a memory 107. In another implementation manner of the present invention, the navigation terminal 100 may also use a bus structure. In a specific implementation manner, the satellite positioning unit may be a GPS unit or another unit that has a satellite positioning function, may be a separate module or unit, or a module or unit integrated into the processor 101, which is not limited in the present invention.

The man-machine 102 is configured to receive a navigation command input by a user. In this implementation manner of the present invention, the man-machine interface 102 includes a display screen, and in particular, a touch display screen. The user inputs the navigation command in a touch manner. In this specific implementation manner, the navigation command includes information about a start point of navigation and information about a destination of navigation. The communications interface 103 may be specifically a transceiver, which is configured to implement remote communication. For example, the communications interface 103 is connected to and communicates with the remote navigation service system 200. The satellite positioning unit 105 communicates with a positioning satellite 300 to determine a current position of the vehicle. In this implementation manner, the current position of the vehicle may be position information indicated by numbers.

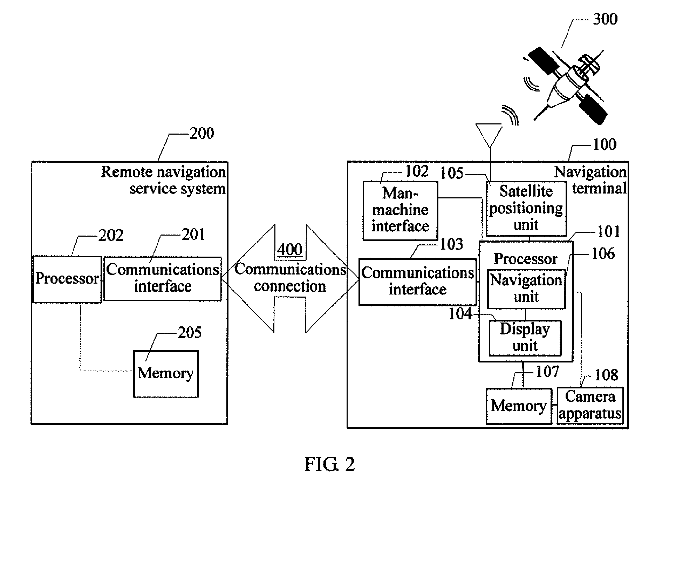

In another implementation manner of the present invention, as shown in FIG 2, the processor 101 includes a navigation unit 106 and a display unit 104. The navigation unit 106 and the display unit 104 may be a computer executable program, which is executed by the processor 101. The navigation unit 106 is configured to send the navigation command and the current position information of the vehicle to the remote navigation service system 200 through the communications interface 103 by using a communications connection 400, and receive a navigation indication sent back by the remote navigation service system 200 through the communications interface. The display unit 104 is configured to present the navigation indication to the user. Specifically, the navigation indication may be presented by controlling the man-machine interface 102. In this implementation manner of the present invention, the communications connection 400 includes, but is not limited to, a communications connection implemented by using technologies, such as GSM (Global System For Mobile Communications, Global System For Mobile Communications), WiFi (Wireless Fidelity, Wireless Fidelity), WiMAX (Worldwide Interoperability for Microwave Access, Worldwide Interoperability for Microwave Access), CDMA (Code Division Multiple Access, Code Division Multiple Access), HSPA (High Speed Packet Access, High Speed Packet Access), or LTE (Long Term Evolution, Long Term Evolution).

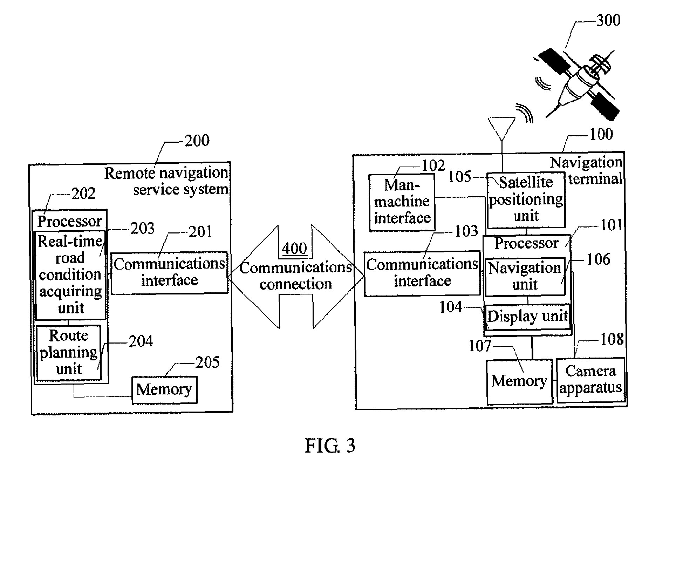

The remote navigation service system 200 is configured to provide a navigation service for the navigation terminal 100, including planning a route and generating the navigation indication according to the navigation command, and the like. The navigation service system 200 includes a communications interface 201. The communications interface 201 may be specifically a transceiver, which is configured to receive the navigation command and current position information of the vehicle from the navigation terminal 100, where the navigation command may include information about a start point of navigation and information about a destination of navigation; the navigation service system 200 includes a processor 202, which is configured to plan, based on a default navigation principle, a driving route according to the navigation command and an acquired real-time road traffic condition, and form the navigation indication with reference to the current position information of the vehicle, where the navigation indication is sent to the navigation terminal through the communications interface 201; and a memory 205. In this implementation manner of the present invention, the navigation service system 200 may be designed based on a Cloud (Cloud) server architecture. In still another implementation manner of the present invention, as shown in FIG 3, the processor 202 includes a real-time road condition acquiring unit 203 and a route planning unit 204. In this implementation manner of the present invention, the processor 202 may be a processor that has a supercomputing capability and can execute multiple tasks at the same time. The real-time road condition acquiring unit 203 and the route planning unit 204 are software modules that can be compiled and executed by a computer, and are executed by the processor 202 in the present invention, to implement a function of navigation route planning. In another implementation manner of the present invention, a function of the processor 202 may be implemented by renting technical support of a supercomputing center. The supercomputing center refers to a computing center with a computing speed higher than 1000 trillion operations per second, and includes but is not limited to four existing national supercomputing centers in China: National Supercomputing Center in Tianjin, National Supercomputing Center in Shenzhen, National Supercomputing Center in Changsha, and National Supercomputing Center in Jinan.

The real-time road condition acquiring unit 203 is configured to acquire data of a real-time road traffic condition. In practice, the data of a real-time road traffic condition may be obtained in real time by camera apparatuses distributed throughout a city, and the data is stored in a data center of a traffic police department or a server of a city monitoring system. The real-time road condition acquiring unit 203 is connected to and communicates with the data center of the traffic police department or the server of the city monitoring system, and acquires the data of a real-time road traffic condition in a wired or wireless manner. The wireless manner includes communication implemented by using a WiMax (Worldwide Interoperability for Microwave Access, Worldwide Interoperability for Microwave Access) technology. The route planning unit 204 is configured to plan, based on a default navigation principle, a driving route according to the navigation command and the acquired real-time road traffic condition, and form the navigation indication with reference to the current position information of the vehicle.

Massive map data may be stored in the memory 205. The route planning unit 204 may be specifically configured to plan a driving route according to the navigation command and the real-time road traffic condition, and form the navigation indication with reference to the current position of the vehicle and the map data in the memory 205. The navigation command includes information about a start point of navigation and information about a destination of navigation. In this implementation manner of the present invention, the navigation indication includes a driving direction indication, which is used to indicate a travelling direction of the vehicle in the current position. In another implementation manner of the present invention, the navigation indication may further include a voice prompt, which is used to perform voice broadcasting of a travelling direction of the vehicle in the current position.

The navigation indication is sent to the navigation terminal 100 through the communications interface 201.

In a specific implementation manner of the present invention, the route planning unit 204 divides a road between the start point and the destination of navigation into multiple navigation segments when planning the route, where each two adjacent navigation segments are connected by a navigation node. The following schematically describes the navigation method of the present invention with reference to a real map shown in FIG 2.

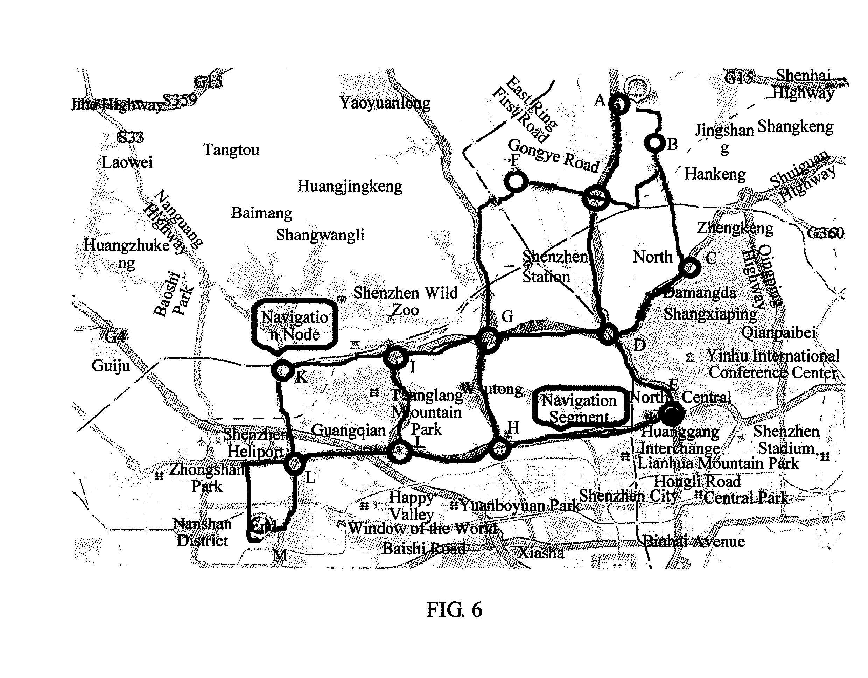

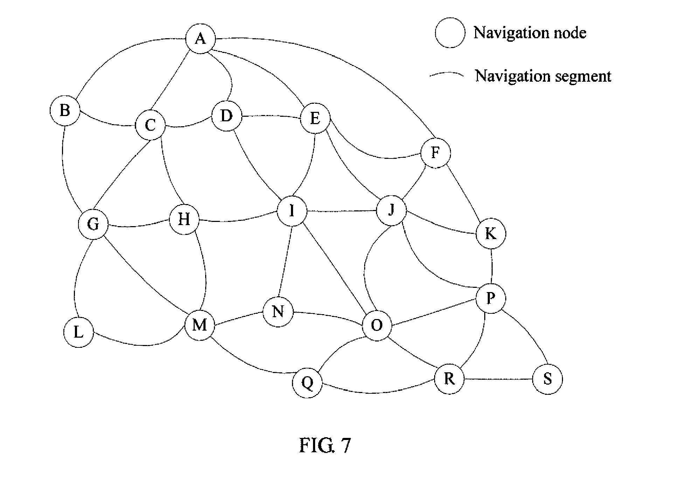

For example, a vehicle sets off from Gangtou (start point) in Shenzhen to a place (destination) in the High-tech Industrial Park in Nanshan District, as shown in FIG 6, and there are a variety of feasible route options. Each road intersection shown in the map is defined as a navigation node, such as locations in circles such as A (start point), B, C, D, E, F, G, H, I, J, K, L, M (destination) shown in FIG 6, while a route between each two adjacent nodes is defined as a navigation segment, for example, a route between the navigation node B and the navigation node C is referred to as a navigation segment BC, and a route between the navigation node D and the navigation node E is referred to as a navigation segment DE, and so on. FIG. 7 shows a schematic diagram of a principle of navigation route planning performed by the remote navigation service system 200 of the present invention, which is summarized according to what is shown in FIG 6. In the schematic diagram shown in FIG 7, the navigation node A is defined as a start point of navigation, and a navigation node S is defined as a destination of navigation. The start point A of navigation is connected to the destination S of navigation by multiple routes, and these routes are divided into multiple segments AB, AC......RS, and the like by navigation nodes B to R. In a specific implementation manner of the present invention, the route planning unit 204 may initially plan a route from A to S according to a default navigation principle. The default navigation principle includes shortest route first, highway first, minimum toll first, shortest time first, most clear route first, and the like. In this implementation manner of the present invention, the default navigation principle is the most clear route first. When planning a default route, the route planning unit 204 firstly selects clear navigation segments between a start point of navigation and a destination of navigation, and then uses navigation nodes to connect these clear navigation segments to form a default, also referred to as initially planned, navigation route. When a road is in a good condition, there may be multiple navigation routes determined based on the principle of the most clear route first. Therefore, in another implementation manner of the present invention, a second navigation principle is defined as a complement to the default navigation principle, so as to make a finally planned route be a unique route. For example, when all routes are clear, there are multiple clear routes from the start point A of navigation to the destination S of navigation, which may be "A-D-I-O-R-S", or may be "A-E-J-O-R-S", or the like. In this case, the route planning unit 204 may further use the second navigation principle, for example, a principle of the shortest route first, to perform secondary path planning, so that a finally planned route is uniquely determined, such as "A-E-J-P-S".

When a vehicle that carries the navigation terminal 100 sets off from the start point A of navigation and travels along a navigation segment AD, the route planning unit 204 confirms whether a next navigation segment DI planned in advance is clear according to a real-time road condition obtained by the real-time road condition acquiring unit 203. If the next navigation segment DI is clear, when the vehicle reaches the navigation node D, the route planning unit 204 sends a navigation indication to the navigation terminal to indicate, to a vehicle driver, that the vehicle driver can continue to drive along the navigation segment DI . When the vehicle travels along the navigation segment AD, if the route planning unit 204 determines, according to a real-time road condition, that congestion occurs on the navigation segment DI for some reason, the route planning unit 204 re-plans a clear route from the navigation node D to the navigation destination S according to the map data in the memory 205 and the real-time road condition obtained by the real-time road condition acquiring unit 203. Referring to the foregoing description, when there are multiple clear routes between the navigation node D and the navigation destination S, the route planning unit 204 starts the second navigation principle to determine a unique navigation route. For example, when both a route "D-C-H-I" and a route "D-E-I" are clear, the route planning unit 204 finally selects the route "D-E-I" that is shorter as a proposed navigation route, and when the vehicle is about to reach the navigation node D, the route planning unit 204 sends a navigation indication to the navigation terminal 100, to indicate, to the vehicle driver, that the vehicle driver can drive along the navigation segment DE after reaching the navigation node D. That is, when the vehicle travels to the navigation node, the route planning unit 204 determines a navigation indication according to a next navigation segment to which each navigation node is directed in a planned navigation route.

In another implementation manner of the present invention, the second navigation principle may further be a principle of shortest time first. For example, the route planning unit 204 calculates, according to a length of each navigation segment and a currently feasible travelling speed under the real-time road condition, time required to pass through a corresponding navigation segment, and plans a navigation route with a shortest travelling time from the current position of the vehicle to the destination S of navigation according to a length of time required to pass through each segment.

In a process in which the vehicle travels along a navigation segment DE, the route planning unit 204 also makes a judgment according to a real-time road condition, and sends a navigation indication to the navigation terminal 100 when the vehicle reaches a navigation node E, to indicate a direction in which the vehicle driver travels after reaching the navigation node E.

In this implementation manner of the present invention, the navigation indication is sent to the navigation terminal 100 through the communications interface 201 before the vehicle reaches each navigation node. The man-machine interface 102 is further configured to present the navigation indication. In a specific implementation manner of the present invention, the navigation indication includes a voice prompt, the man-machine interface 102 includes a speaker, and the voice prompt is played by the speaker and presented to the user.

In another implementation manner of the present invention, the navigation terminal 100 further includes a camera apparatus 108, which is configured to photograph a road scene in front of the vehicle, where the road scene is displayed in real time on a display screen of the man-machine interface 102. In this implementation manner, the camera apparatus 108 is a camera. In a specific implementation manner of the present invention, the camera apparatus 108 is built in the navigation terminal 100. In another specific implementation manner of the present invention, the camera apparatus is separated from a body of the navigation terminal 100 and is installed at a front end of the vehicle, and transfers the photographed road scene to the body of the navigation terminal 100 in a wired or wireless manner, and the photographed road scene is displayed on the display screen of the man-machine interface 102. In a specific implementation manner of the present invention, the navigation indication sent back by the remote navigation service system 200 includes a driving direction indication, and the driving direction indication is superimposed on the road scene, and is displayed on the display screen of the man-machine interface 102, so as to more vividly and visually present a travelling direction when the vehicle reaches each navigation node. Because the road scene is photographed in real time and visually reflects a real scenario, the driving direction indication is superimposed on the real scenario and then displayed, so as to provide a more vivid and visual travelling prompt to the user. Therefore, user experience is improved, and a function of the navigation terminal is enhanced. This part may also be implemented by using an AR (Augmented Reality, Augmented Reality) technology, which is not limited in the present invention. The camera apparatus may also exist in another form, such as an apparatus that is put on the head or eyes of the user, for example, a pair of glasses with a camera, which is not limited in the present invention.

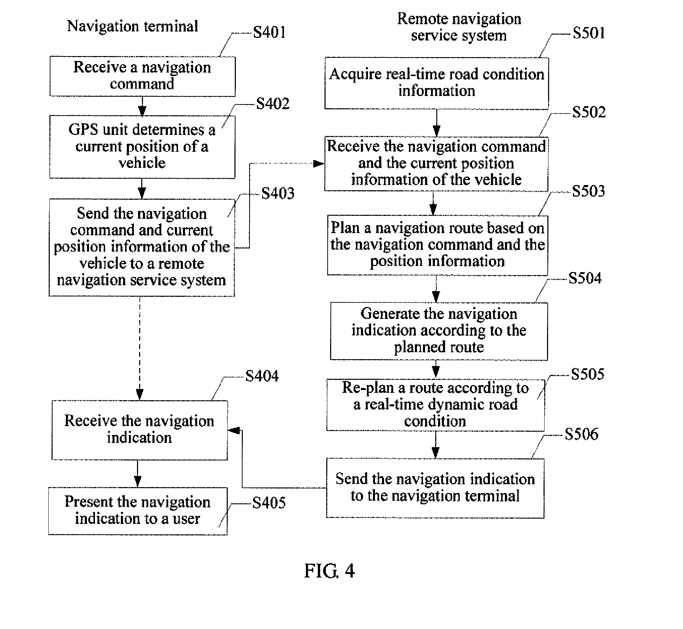

FIG 4 shows a detailed flowchart of planning a navigation route according to the present invention. When a navigation service is required, a navigation screen is presented on a man-machine interface 102, and a user inputs a navigation command on the navigation screen. In step S401, a navigation terminal 100 receives the navigation command input by the user through the man-machine interface 102. The navigation command includes information about a start point of navigation and information about a destination of navigation. In step S402, a satellite positioning unit (such as a GPS unit) 105 determines a current position of a vehicle. In this implementation manner, the current position of the vehicle may be position information indicated by numbers. It should be noted that, although step S401 and step S402 in this implementation manner are described successively, in a specific application, because processing units for these two steps are the man-machine interface 102 and the satellite positioning unit 105 respectively, which operate independently, a sequence of these two steps may be adjusted, or there may be no sequence between them. In step S403, a communications interface 103 sends the navigation command and current position information of the vehicle to a remote navigation service system 200 through a communications connection 400.

In this implementation manner of the present invention, a real-time road condition acquiring unit 203 of the remote navigation service system 200 keeps on acquiring road condition information in real time, and this process is performed synchronously with other implementation steps. For ease of description, in this implementation manner, a step in which the real-time road condition acquiring unit 203 acquires the real-time road condition is listed as step S501. In practice, in a process of implementing other steps, the real-time road condition acquiring unit 203 still acquires the real-time road information, which is not only performed before step S502, which must be explained first.

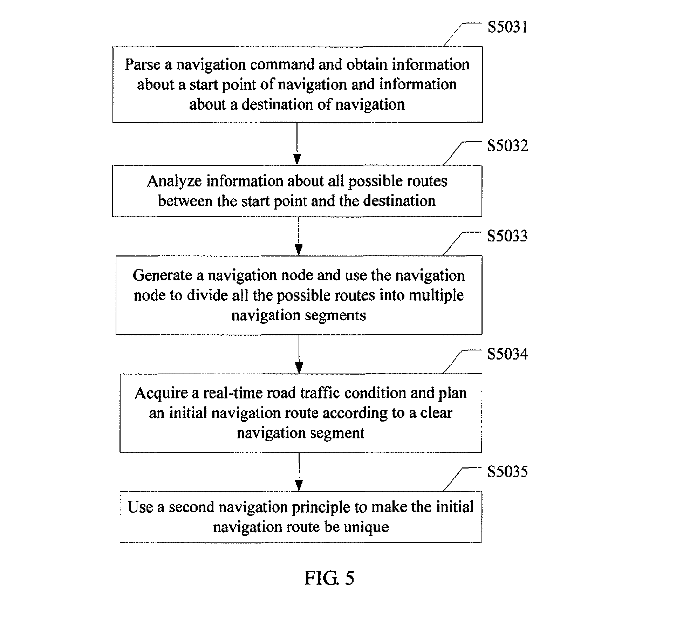

In step S502, a communications interface 201 in the remote navigation service system 200 receives the navigation command and the current position information of the vehicle. In step S503, a route planning unit 204 plans a navigation route of the vehicle based on the navigation command and the position information of the vehicle. In step S504, the route planning unit 204 may also re-plan the navigation route according to the real-time dynamic road condition information, so that the vehicle may avoid a congested segment of a road. Details of step S503 and step S504 is described in FIG. 5.

In step S505, the route planning unit 204 generates a navigation indication according to a planned driving route. In step S506, the navigation indication is sent to the navigation terminal 100 through the communications interface 201.

In step S404, the navigation terminal 100 receives the navigation indication through the communications interface 103. In step S405, a display unit 104 presents the navigation indication to the user, that is, a driver of the vehicle. In this implementation manner of the present invention, the navigation indication includes a voice prompt, where the voice prompt is played by a speaker of the man-machine interface 102 and presented to the user. In another implementation manner of the present invention, a navigation indication sent back by the remote navigation service system 200 includes a driving direction indication, and the navigation terminal 100 includes a camera apparatus 108 at the same time, where the camera apparatus 108 photographs a road scene in front of the vehicle, the driving direction indication is superimposed on the road scene and displayed on a display screen of the man-machine interface 102 to present a next step travelling direction when the vehicle reaches each navigation node. FIG. 5 shows a detailed flowchart illustrating that the route planning unit 204 plans a driving route according to a real-time road condition in an implementation manner of the present invention. In step S5031, the route planning unit 204 parses the navigation command and obtains information about a start point of navigation and information about a destination of navigation, for example, information about a start point A and a destination S shown in FIG. 3. In step S5032, the route planning unit 204 analyses information about all possible routes between the start point A and the destination S according to map data provided by the memory 205. In step S5033, the route planning unit 204 sets places where all determined possible routes intersect as navigation nodes. As a result, all the possible routes are divided into multiple navigation segments by these navigation nodes.

In step S5304, the route planning unit 204 determines a navigation segment in which traffic congestion occurs among multiple navigation segments according to real-time road condition information provided by the real-time road condition acquiring unit 203, so as to select clear navigation segments between the start point and the destination of navigation, and uses the navigation nodes to connect these clear navigation segments to form an initially planned navigation route that is determined based on a principle of the most clear route first. When a road is in a good condition, there are multiple initially planned navigation routes that are determined based on the principle of the most clear route first. Therefore, in step S5035, the route planning unit 204 may further use a second navigation principle, such as a principle of the shortest route first, so as to make the initially planned route be unique. The unique planned route is then converted into a navigation indication and transferred to a navigation terminal 100.

In this implementation manner of the present invention, when the vehicle travels on a first navigation node in a planned route in the navigation indication, the satellite positioning unit 105 determines, in real time, position information of the vehicle, and the position information may be transferred, in real time, to the remote navigation service system 200 through the communications interface 103. During this period, the route planning unit 204 plans a navigation route from the first navigation node, for example, the navigation node D shown in FIG. 3, to the navigation destination S according to real-time dynamic road condition information.

The foregoing descriptions are merely exemplary implementation manners of the present invention, but are not intended to limit the protection scope of the present invention. Any equivalent changes and modifications made within the conception and principle of the present invention shall fall within the protection scope of the present invention.

## Claims

1. A navigation terminal, which is connected to and communicates with a remote navigation service system, to perform vehicle navigation, wherein the navigation terminal comprises:
a man-machine interface, configured to receive a navigation command input by a user, wherein the man-machine interface comprises a display screen;
a communications interface, configured to implement remote communication;
a satellite positioning unit, configured to determine current position information of a vehicle; and
a processor, configured to send the navigation command and the current position information of the vehicle to the remote navigation service system through the communications interface, and receive a navigation indication sent back by the remote navigation service system through the communications interface, wherein
the man-machine interface is further configured to present the navigation indication.

2. The navigation terminal according to claim 1, further comprising a camera apparatus, configured to photograph a road scene in front of the vehicle, wherein the road scene is displayed on the display screen of the man-machine interface.

3. The navigation terminal according to claim 2, wherein the navigation indication comprises a driving direction indication, and the driving direction indication is superimposed on the road scene for navigation.

4. The navigation terminal according to claim 1, wherein the navigation indication comprises a voice prompt, the man-machine interface comprises a speaker, and the voice prompt is played by the speaker and presented to the user.

5. The navigation terminal according to any one of claims 1 to 4, wherein the navigation command comprises information about a start point of navigation and information about a destination of navigation.

6. The navigation terminal according to claim 2 or 3, wherein the camera apparatus is built in a body of the navigation terminal.

7. The navigation terminal according to claim 2 or 3, wherein the camera apparatus is separated from a body of the navigation terminal and is disposed at a front end of the vehicle, and transfers the photographed road scene to the body of the navigation terminal in a wired or wireless manner, and the photographed road scene is displayed on the display screen of the man-machine interface.

8. A navigation method, comprising:
receiving a navigation command input by a user;
starting a satellite positioning unit to determine current position information of a vehicle;
sending the navigation command and the current position information of the vehicle to a remote navigation service system through a communications interface;
receiving a navigation indication sent back by the remote navigation service system through the communications interface; and
presenting the navigation indication to the user for navigation.

9. The navigation method according to claim 8, comprising:
photographing a road scene in front of the vehicle, wherein the road scene is displayed on a display screen of a man-machine interface.

10. The navigation method according to claim 9, wherein the navigation indication comprises a driving direction indication, and the driving direction indication is superimposed on the road scene for navigation.

11. The navigation method according to claim 8, wherein the navigation indication comprises a voice prompt, the man-machine interface comprises a speaker, and the voice prompt is played by the speaker and presented to the user.

12. The navigation method according to any one of claims 8 to 11, wherein the navigation command comprises information about a start point of navigation and information about a destination of navigation.

13. A remote navigation service system, configured to provide a navigation service for a navigation terminal, wherein the navigation service system comprises:
a communications interface, configured to receive a navigation command and current position information of a vehicle from the navigation terminal, wherein the navigation command comprises information about a start point of navigation and information about a destination of navigation; and
a processor, configured to plan, based on a default navigation principle, a driving route according to the navigation command and an acquired real-time road traffic condition, and form a navigation indication with reference to the current position information of the vehicle, wherein
the navigation indication is sent to the navigation terminal through the communications interface.

14. The remote navigation service system according to claim 13, wherein the navigation indication comprises a driving direction indication, which is used to indicate a travelling direction of the vehicle in a current position.

15. The remote navigation service system according to claim 13, wherein the navigation indication comprises a voice prompt, which is used to perform voice broadcasting of a travelling direction of the vehicle in a current position.

16. The remote navigation service system according to any one of claims 13 to 15, wherein the processor specifically comprises:
a real-time route acquiring unit, configured to acquire a real-time road traffic condition; and
a route planning unit, configured to plan, based on the default navigation principle, the driving route according to the navigation command and the acquired real-time road traffic condition, and form the navigation indication with reference to the current position information of the vehicle, wherein
the navigation indication is sent to the navigation terminal through the communications interface.

17. The remote navigation service system according to claim 16, wherein the route planning unit divides a road between the start point and the destination into multiple navigation segments, wherein each two adjacent navigation segments are connected by a navigation node.

18. The remote navigation service system according to claim 17, wherein the navigation node is a road intersection.

19. The remote navigation service system according to claim 17, wherein the route planning unit connects, by using the navigation node, clear navigation segments between the start point and the destination of navigation to form a proposed navigation route.

20. The remote navigation service system according to claim 19, wherein the route planning unit may further select the proposed navigation route according to a second navigation principle.

21. The remote navigation service system according to claim 20, wherein the route planning unit calculates, based on the second navigation principle and according to a length of each navigation segment and a currently feasible travelling speed under a real-time road condition, time required to pass through a corresponding navigation segment.

22. The remote navigation service system according to claim 21, wherein the route planning unit selects, according to the time required to pass through each navigation segment, a navigation route with a shortest travelling time from the current position of the vehicle to the destination of navigation.

23. The remote navigation service system according to any one of claims 19 to 22, wherein the route planning unit determines, according to a next navigation segment to which each navigation node is directed in a planned navigation route, a navigation indication that is used when the vehicle travels to the navigation node.

24. The remote navigation service system according to claim 23, wherein the navigation indication is sent to the navigation terminal through the communications interface before the vehicle reaches each navigation node.

25. The remote navigation service system according to any one of claims 13 to 22, wherein the real-time road condition acquiring unit acquires the real-time road traffic condition from a server of a city monitoring system or a data center of a traffic police department in a wired or wireless manner.
